(19) **Europäisches Patentamt**

**European Patent Office**

**Office européen des brevets**

(11) **EP 1 428 233 B1**

(12) **EUROPÄISCHE PATENTSCHRIFT**

(45) Veröffentlichungstag und Bekanntmachung des Hinweises auf die Patenterteilung:
**13.09.2006 Patentblatt 2006/37**

(21) Anmeldenummer: **02751153.4**

(22) Anmeldetag: **19.07.2002**

(51) Int Cl.:
*H01G 5/16* (2006.01)

(86) Internationale Anmeldenummer:
**PCT/EP2002/008090**

(87) Internationale Veröffentlichungsnummer:
**WO 2003/025958 (27.03.2003 Gazette 2003/13)**

(54) **VORRICHTUNG ZUM MECHANISCHEN STEUERN EINER ELEKTRISCHEN KAPAZITÄT UND VERFAHREN ZUR HERSTELLUNG DERSELBEN**

DEVICE FOR MECHANICALLY REGULATING AN ELECTRICAL CAPACITANCE, AND METHOD FOR MAKING SAME

DISPOSITIF PERMETTANT DE REGULER MECANIQUEMENT UNE CAPACITE ELECTRIQUE, ET SON PROCEDE DE PRODUCTION

(84) Benannte Vertragsstaaten:
**DE FR GB**

(30) Priorität: **17.09.2001 DE 10145721**

(43) Veröffentlichungstag der Anmeldung:
**16.06.2004 Patentblatt 2004/25**

(73) Patentinhaber: **Infineon Technologies AG
81669 München (DE)**

(72) Erfinder:
• **KAPELS, Hergen
  85579 Neubiberg (DE)**
• **OPPERMANN, Klaus-Guenter
  83607 Holzkirchen (DE)**

(74) Vertreter: **Schoppe, Fritz et al
Patentanwälte
Schoppe, Zimmermann, Stöckeler & Zinkler
Postfach 246
82043 Pullach bei München (DE)**

(56) Entgegenhaltungen:
**DE-A- 19 808 549**

• **PATENT ABSTRACTS OF JAPAN vol. 1999, no. 02, 26. Februar 1999 (1999-02-26) & JP 10 313123 A (AISIN SEIKI CO LTD), 24. November 1998 (1998-11-24)**

EP 1 428 233 B1

**Beschreibung**

Die vorliegende Erfindung bezieht sich auf das Gebiet von Vorrichtungen zum Steuern von elektrischen Kapazitäten und insbesondere auf das Gebiet von Vorrichtungen zum mechanischen Steuern von elektrischen Kapazitäten.

Vorrichtungen, bei denen eine elektrische Kapazität mechanisch verändert wird, werden heutzutage in zahlreichen Anwendungen, beispielsweise als mechanische Kapazitätsschalter zum Steuern eines Ein- und Auskoppelns von Hochfrequenzsignalen, verwendet.

Diese mikromechanischen Kapazitätsschalter sind typischerweise aus drei Elektrodenplatten aufgebaut, die auf einem Substrat angeordnet sind, wobei eine erste Elektrodenplatte bezüglich einer zweiten und dritten Elektrodenplatte, die jeweils Gegenelektroden zu der ersten Elektrodenplatte sind, beweglich gehalten ist. Die zweite Elektrodenplatte legt dabei zusammen mit der beweglichen ersten Elektrodenplatte eine elektrische Kapazität fest, wobei die dritte Elektrodenplatte als aktuierende Gegenelektrode wirkt, so daß durch ein Anlegen einer elektrischen Spannung zwischen der ersten und dritten Elektrodenplatte die zwischen der ersten und zweiten Elektrodenplatte gebildete elektrische Kapazität verändert werden kann.

Der mikromechanische Schalter kann dabei beispielsweise zum Steuern eines Ein- und Auskoppelns von Hochfrequenzsignalen verwendet werden, indem die elektrische Kapazität, die mit einem Hochfrequenzschaltkreis gekoppelt ist, verändert wird. Dazu ist die erste und zweite Elektrodenplatte, die die steuerbare elektrische Kapazität definieren, über Anschlüsse mit Leitungen des Hochfrequenzschaltkreises verbunden.

Bei bekannten mikromechanischen Schaltern sind die zweite und dritte Elektrodenplatte in einer gleichen Richtung bezüglich der ersten Elektrodenplatte angeordnet, wobei die zweite Elektrodenplatte im Signalpfad zum Teil auch mit der dritten Elektrodenplatte identisch ist.

Je nach elektrischer Spannung, die zwischen der aktuierenden dritten Elektrodenplatte und der beweglichen ersten Elektrodenplatte zum Steuern des Kapazitätsschalters anliegt, wirken auf die bewegliche erste Elektrodenplatte starke elektrostatische Anziehungskräfte. Folglich ist es oft erforderlich, daß die bewegliche Elektrodenplatte mit einer entsprechenden Dicke gebildet wird, um ein übermäßiges Verbiegen derselben zu verhindern. Bei vielen Vorrichtungen ist jedoch ein Umschalten zwischen einer niedrigen und hohen Kapazität mit geringer Schaltzeit erforderlich, wobei sich bei der Ausführung der beweglichen Elektrodenplatte mit einer großen Dicke eine große Trägheit ergibt, was sich für das Verhalten des mechanischen Kapzitätsschalters nachteilig auswirkt.

Ferner kann es für viele Anwendungen wünschenswert sein, daß der mechanische Kapazitätsschalter eine hohe maximale Kapazität aufweist. Die Erhöhung der Kapazität kann durch ein Verringern des Abstands der beweglichen ersten Elektrodenplatte und der zweiten Elektrodenplatte erreicht werden, wobei das Verringern jedoch durch die auftretenden Rauhigkeiten und Unebenheiten der Oberflächen begrenzt ist, so daß oftmals die Flächen der beweglichen ersten Elektrodenplatte und der zweiten Elektrodenplatte vergrößert werden, um eine vergrößerte Grundkapazität zu erreichen.

Dadurch wird jedoch der Flächenverbrauch des Chips erhöht, wobei aufgrund der vergrößerten Fläche die bewegliche Elektrodenplatte wiederum mit einer großen Dicke vorgesehen werden muß, um übermäßige Verbiegungen, insbesondere in der Flächenmitte, zu verhindern.

Aus JP-A-10 313 123 ist eine Vorrichtung bekannt, bei welcher eine erste und eine zweite Elektrodenstruktur vorliegt, die jeweils als Kammzinken ausgebildete Vorsprünge und Ausnehmungen aufweisen. Die erste Elektrodenstruktur ist schwebend auf einem Siliciumsubstrat gelagert, während die zweite als feste Elektrode ausgebildet ist.

Die Aufgabe der vorliegenden Erfindung besteht darin, eine Vorrichtung und ein Verfahren zu schaffen, die ein verbessertes mechanisches Steuern einer elektrischen Kapazität ermöglichen.

Diese Aufgabe wird durch eine Vorrichtung gemäß Anspruch 1 und ein Verfahren gemäß Anspruch 9 gelöst.

Die vorliegende Erfindung schafft eine Vorrichtung zum mechanischen Steuern einer elektrischen Kapazität, wobei die Vorrichtung folgende Merkmale aufweist:

eine erste Elektrodenstruktur mit einer ersten und zweiten Oberfläche, wobei die erste Oberfläche zumindest einen Vorsprung aufweist;

eine zweite Elektrodenstruktur, die von der ersten Elektrodenstruktur beabstandet ist und zumindest eine Ausnehmung aufweist, die so angeordnet ist, daß der zumindest eine Vorsprung der ersten Elektrodenstruktur in dieselbe ragt, wodurch eine elektrische Kapazität zwischen gegenüberliegenden Oberflächenbereichen der ersten und zweiten Elektrodenstruktur festgelegt ist; und

eine dritte Elektrodenstruktur zum Steuern der elektrischen Kapazität zwischen der ersten und zweiten Elektrodenstruktur, wobei die dritte Elektrodenstruktur zu der ersten Elektrodenstruktur beabstandet ist und der zweiten Oberfläche der ersten Elektrodenstruktur gegenüberliegt;

wobei die erste Elektrodenstruktur bezüglich der zweiten und dritten Elektrodenstruktur frei beweglich ausgebildet ist, so daß durch ein Anlegen einer elektrischen Spannung zwischen der ersten und dritten Elektrodenstruktur die elektrische Kapazität zwischen gegenüberliegenden Oberflächenbereichen der ersten und zweiten Elektrodenstruktur durch ein Verändern des Abstands zwischen der ersten und zweiten Elektrodenstruktur steuerbar ist.

Die vorliegende Erfindung basiert auf der Erkenntnis, daß ein verbessertes mechanisches Steuern einer elektrischen Kapazität dadurch erreicht werden kann, daß eine bewegliche erste Elektrode auf einer Seite, die einer festen zweiten Elektrode gegenüberliegt, zumindest einen Vorsprung aufweist, wobei die feste zweite Elektrode eine Ausnehmung aufweist, in die der Vorsprung ragt. Die dadurch erreichte "Verzahnung" der beweglichen Elektrode und der festen zweiten Elektrode bewirkt, daß eine durch die gegenüberliegenden Oberflächen derselben festgelegte Kapazität vergrößert ist, so daß eine erhöhte Grundkapazität pro Chipfläche und eine hohe Empfindlichkeit der Kapazitätssteuerung erreicht wird.

Ein Vorteil der vorliegenden Erfindung besteht darin, daß durch die Vorsprünge der beweglichen Elektrode das Flächenträgheitsmoment der beweglichen Elektrode gegenüber einer Elektrodenplatte mit entsprechender Dicke erhöht ist, so daß Schichtspannungen und Spannungsgradienten die bewegliche Elektrode in geringerem Maß beeinflussen. Dies ermöglicht, daß ein Abstand zwischen der beweglichen Elektrode und der zweiten Elektrode zum Erzeugen der elektrischen Kapazität vorzugsweise sehr gering gewählt werden kann, wodurch wiederum die Grundkapazität pro Substratfläche weiter erhöht werden kann.

Ein bevorzugtes Ausführungsbeispiel der vorliegenden Erfindung umfaßt einen mikromechanischen Schalter, bei dem die bewegliche erste Elektrode zwischen einer zweiten Elektrode, die eine durch gegenüberliegende Oberflächen derselben gebildete elektrische Kapazität festlegt, und einer dritten aktuierenden Elektrode, die zum Steuern der elektrischen Kapazität verwendet wird, angeordnet ist. Die bewegliche erste Elektrode weist eine Mehrzahl von Vorsprüngen auf, die in eine Mehrzahl von Ausnehmungen in der ersten Gegenelektrode hineinragen.

Durch ein Anlegen einer elektrischen Spannung zwischen der dritten Elektrode und der beweglichen ersten Elektrode wird ein Abstand zwischen der beweglichen ersten Elektrode und der zweiten Elektrode verändert, wodurch die elektrische Kapazität zwischen der ersten und zweiten Elektrode gesteuert wird.

Die zweite Elektrode besteht ferner vorzugsweise aus einem Metall, einem hochdotierten Bereich des Substrats oder einem hochdotierten Polysiliziumbereich, während die bewegliche Elektrode vorzugsweise ein leitfähiges Polysiliziummaterial aufweist.

Bei einem bevorzugten Ausführungsbeispiel ist ferner die dritte Elektrode als ein strukturierter Deckel ausgebildet, der die zusätzliche Funktion eines mechanischen und elektrischen Schutzes für den mikromechanischen Schalter aufweist.

Die erste, zweite und dritte Elektrode werden vorzugsweise durch mikromechanische Herstellungsprozesse in einem Halbleitersubstrat unter Verwendung von Opferschichten aus Oxidmaterial hergestellt, was eine Integrierung des Herstellungsprozesses in einen bekannten BiCMOS-Prozessablauf ermöglicht.

Bevorzugte Ausführungsbeispiele der vorliegenden Erfindung werden nachfolgend unter Bezugnahme auf die beiliegenden Zeichnungen näher erläutert. Es zeigen:

Fig. 1    einen Querschnitt eines bevorzugten Ausführungsbeispiels der vorliegenden Erfindung;

Fig. 2    eine Draufsicht des Ausführungsbeispiels von Fig. 1;

Fig. 3    eine perspektivische Ansicht eines Abschnitts des Ausführungsbeispiels von Fig. 1; und

Fig. 4    ein Schaltungsdiagramm zur Darstellung eines Betriebs eines erfindungsgemäßen Kapazitätsschalters.

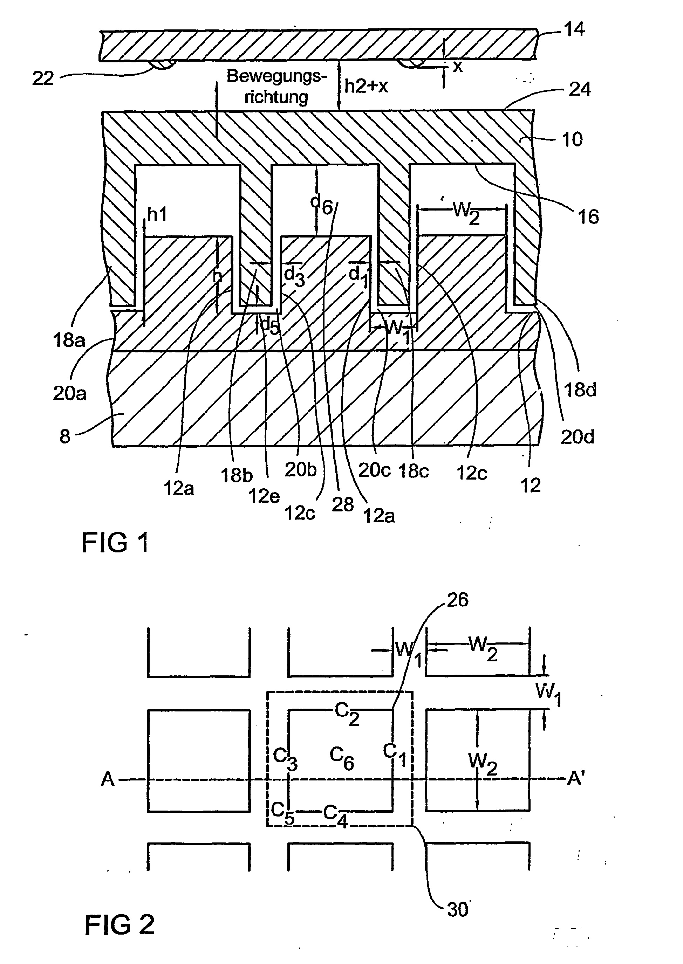

Unter Bezugnahme auf Fig. 1 ist ein mikromechanischer Kapazitätsschalter als ein bevorzugtes Ausführungsbeispiel der vorliegenden Erfindung gezeigt, bei dem in einem Substrat 8, das vorzugsweise aus Silizium oder einem anderen Halbleitermaterial besteht, eine erste Elektrodenstruktur 10 zwischen einer zweiten Elektrodenstruktur 12 und einer dritten Elektrodenstruktur 14 gebildet ist.

Die erste Elektrodenstruktur 10 besteht vorzugsweise aus Polysilizium oder anderen leitfähigen Materialien und ist bezüglich der zweiten 12 und dritten 14 Elektrodenstruktur beweglich ausgebildet, was vorzugsweise durch ein Aufhängen der Elektrodenstukturmasse an einer Feder erreicht wird, die beispielsweise mittels bekannter Strukturierungs- und Ätztechniken hergestellt werden kann.

Die erste Elektrodenstruktur 10 weist ferner auf einer ersten Oberfläche 16 eine Mehrzahl von Vorsprüngen auf, von denen in Fig. 1 Vorsprünge 18a - 18d gezeigt sind, die in zugeordnete Ausnehmungen 20a - 20d der zweiten Elektrodenstruktur 12 hineinragen.

Die zweite Elektrodenstruktur 12 ist vorzugsweise ein leitfähiger Bereich in dem Substrat, der beispielsweise aus einem hochdotierten Bereich des Substratmaterials, einem leitfähigen Polysilizium oder einem aufgebrachten Metall bestehen kann.

Die dritte Elektrodenstruktur 14 ist vorzugsweise als eine strukturierte Abdeckung bzw. Deckel gebildet, die den mikromechanischen Kapazitätsschalter verschließt. Das Vorsehen der dritten Elektrodenstruktur 14 als eine strukturierte Abdekkung bietet den Vorteil, daß dieselbe zusätzlich zu der Funktion einer Gegenelektrode zum Steuern der beweglichen ersten Elektrodenstruktur 10 ferner als ein Gehäuse auf Wafer-Ebene (Wafer-Level-Package) wirkt, das den mikromechanischen Schalter bei einer Ausgangsseite des Herstellungsprozesses (Backend des Herstellungsprozesses) und bei einem Verpacken schützt, wodurch ein Verpacken des mikromechanischen Schalters mit standardmäßiger Ausrüstung und ein Aufbringen eines standardmäßigen Gehäuses ermöglicht wird. Vorzugsweise ist der Deckel aus einem leitfähigen Halbleitermaterial, wie beispielsweise Polysilizium, oder einem Metall gebildet.

Die dritte Elektrodenstruktur 14 weist ferner elektrisch isolierende Höcker 22 auf, die einer zweiten Oberfläche 24 der ersten Elektrodenstruktur 10 gegenüberliegen und als ein Abstandshalter dienen, wenn sich die erste Elektrodenstruktur 10 in einer ausgelenkten Lage befindet.

Wie es weiter unten genauer erklärt wird, dient die zweite Elektrodenstruktur 12 als eine Gegenelektrode zu der ersten Elektrodenstruktur 10, wobei durch gegenüberliegende Flächen der ersten 10 und zweiten 12 Elektrodenstruktur eine steuerbare bzw. schaltbare elektrische Kapazität eines Schaltkreises festgelegt wird, die durch eine vertikale Bewegung der ersten Elektrodenstruktur steuerbar bzw. umschaltbar ist.

Die in Fig. 1 gezeigte Anordnung stellt dabei einen ersten Betriebszustand des mikromechanischen Schalters dar, bei dem sich die erste Elektrodenstruktur 10 in einer nicht-ausgelenkten Lage bzw. Ruhelage befindet.

Die Vorsprünge 18a - 18d ragen mit einer Länge h in die Ausnehmungen 20a - 20d der zweiten Elektrodenstruktur 12 hinein, wobei die Ausnehmungen 20a - 20d jeweils eine Höhe $h_1$ und eine Breite $w_1$ aufweisen. Die Vorsprünge 18a - 18d sind von Seitenoberflächen 12a und 12c der zweiten Elektrodenstruktur 12, die durch die Ausnehmungen 20a - 20d gebildet sind, mit einem Abstand $d_1$ bzw. $d_3$ beabstandet und von unteren Oberflächen 12e der zweiten Elektrodenstruktur 12 in der nicht-ausgelenkten Lage mit einem Abstand $d_5$ beabstandet, wobei vorzugsweise die beiden seitlichen Abstände $d_1$ gleich gewählt sind, so daß die Vorsprünge 18a - 18d in der Mitte der Ausnehmungen 20a - 20d angeordnet sind.

Zwischen den ersten Oberflächen 16 der ersten Elektrodenstruktur 10 und den oberen Oberflächen 26 der zweiten Elektrodenstruktur 12 ist ferner jeweils ein Spalt 28 ausgebildet, der in der nicht-ausgelenkten Lage eine Höhe $d_6$ aufweist, die den Abstand zwischen der ersten 10 und zweiten 12 Elektrodenstruktur definiert.

Die Höcker 22 auf der dritten Elektrodenstruktur 14 weisen eine Höhe x bezüglich der Oberfläche der dritten Elektrodenstruktur 14 auf. Ferner ist bei der in Fig. 1 gezeigten nicht-ausgelenkten Ruhelage die zweite Oberfläche 24 mit einem Abstand $h_2$ zu den Höckern 22 angeordnet. Vorzugsweise entspricht $h_2$ der Eintauchtiefe h, mit der die Vorsprünge 18a - 18d der ersten Elektrodenstruktur 10 in der nicht-ausgelenkten Lage in die Ausnehmungen 20a - 20d der zweiten Elektrodenstruktur 12 hineinragen.

Folglich weist die zweite Oberfläche 24 der ersten Elektrodenstruktur 10 einen Abstand zu der gegenüberliegenden Oberfläche der dritten Elektrodenstruktur 14 auf, die der Summe aus $h_2$ und x entspricht.

Legt man nun zwischen der ersten Elektrodenstruktur 10 und der dritten Elektrodenstruktur 14 eine geeignete elektrische Steuerspannung an, so wirken zwischen denselben elektrostatische Kräfte, die die bewegliche erste Elektrodenstruktur von der in Fig. 1 gezeigten nicht-ausgelenkten Lage in eine ausgelenkte Lage bringen, bei der die erste Elektrodenstruktur 10 mit der zweiten Oberfläche 24 an die Höcker 22 anstößt. Dieser Zustand stellt eine maximale Auslenkung dar, bei der die Eintauchtiefe h gerade null ist, wenn in der nicht-ausgelenkten Lage der Abstand $h_2$ gleich der Eintauchtiefe h gewählt wurde. In dieser Lage wird die minimale elektrische Kapazität zwischen der ersten 10 und zweiten 12 Elektrodenstruktur eingenommen, wie es weiter unten erklärt wird.

Unter Bezugnahme auf Fig. 2 wird nun eine Draufsicht der in Fig. 1 gezeigten zweiten Elektrodenstruktur 12 erklärt. Die in Fig. 2 gezeigte Linie A-A' entspricht dabei einer Schnittlinie der Querschnittdarstellung von Fig. 1.

Gemäß Fig. 2 ist zu erkennen, daß die tieferliegenden Ausnehmungen der zweiten Elektrodenstruktur 12 in der Form eines regelmäßigen Gittermuster gebildet sind, so daß die zweite Elektrodenstruktur 12 eine Struktur mit regelmäßig angeordneten Quadern aufweist. Die regelmäßig angeordneten Quader sind in der in Fig. 2 gezeigten Draufsicht als Quadrate dargestellt, die jeweils eine Breite $w_2$ aufweisen und durch die Breite $w_1$ der Ausnehmungen jeweils voneinander beabstandet sind.

Durch die regelmäßige Struktur der zweiten Elektrodenstruktur 12 kann dieselbe als eine regelmäßige Anordnung von Einheitszellen bzw. Grundzellen 30, die jeweils aneinander angrenzen, aufgefaßt werden. In Fig. 2 ist eine mögliche Grundzelle 30 dargestellt, wobei dieselbe räumlich gesehen einen Quader, der in der Draufsicht von Fig. 2 als ein Quadrat der oberen Oberfläche 26 dargestellt ist, und die an dem Quader der Grundzelle angrenzenden Ausnehmungen mit jeweils der Hälfte ihrer Breite $w_1$ umfaßt.

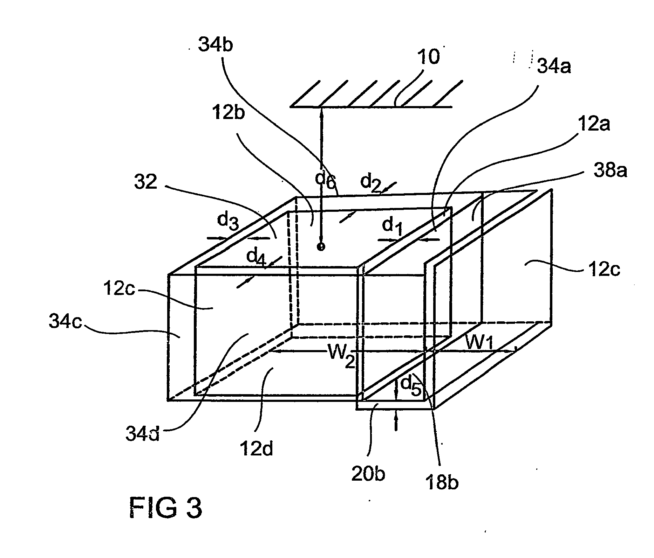

Zur geometrischen Veranschaulichung ist in Fig. 3 eine dreidimensionale Ansicht eines Bereichs der zweiten Elektrodenstruktur 12 mit einer eingebrachten Ausnehmung 18b dargestellt.

Fig. 3 zeigt einen Quader 32 der zweiten Elektrodenstruktur 12, der einer räumlichen Darstellung eines in Fig.

2 gezeigten Quadrats entspricht. An jeder der vier Seitenoberflächen 12a, 12b, 12c und 12d des Quaders 32 sind jeweils Ausnehmungen ausgebildet, wobei jedoch nur die Ausnehmung 20b auf der rechten Seite der Figur vollständig dargestellt ist. In die vier Ausnehmungen ragen vier Vorsprünge, wobei wiederum lediglich der Vorsprung 18b vollständig dargestellt ist, während die übrigen drei Vorsprünge lediglich durch die seitlichen Oberflächen 34a - 34d gezeigt sind, die den Seitenoberflächen 12a - 12d der Ausnehmungen gegenüberliegen. Wie es bereits in Fig. 1 dargestellt wurde, ist die obere Elektrode 10 mit einem Abstand $d_6$ von der oberen Oberfläche 26 des Quaders 32 angeordnet.

Wie es in Fig. 3 zu erkennen ist, weisen die Seitenoberflächen 12a, 12b, 12c, 12d des Quaders 32 jeweils einen Abstand $d_1$, $d_2$, $d_3$ und $d_4$ von den gegenüberliegenden seitlichen Oberflächen 34a - 34d der Vorsprünge auf, wobei dieselben vorzugsweise einen gleichen Wert aufweisen, so daß die Vorsprünge symmetrisch angeordnet sind.

Durch die gegenüberliegenden Oberflächen der ersten Elektrodenstruktur 10 und der zweiten Elektrodenstruktur 12 wird eine elektrische Kapazität gebildet, die sich aus mehreren Kapazitäten zusammensetzt.

Für eine Grundzelle 30 werden zunächst durch die seitlichen Oberflächen 34a - 34d der Vorsprünge und die seitlichen Oberflächen 12a - 12d der zweiten Elektrodenstruktur 12, die einander jeweils mit den Abständen $d_1$, $d_2$, $d_3$ und $d_4$ gegenüberliegen, vier Kapazitäten $C_1$, $C_2$, $C_3$ und $C_4$ erzeugt, wobei sich die überlappende Fläche, die zum Erzeugen der Kapazitäten beiträgt, durch das Produkt der Breite $w_2$ des Quaders 32 und der Eintauchtiefe h der Vorsprünge ergibt.

Dazu addiert sich die Kapazität $C_5$, die sich aufgrund der mit einem Abstand $d_5$ gegenüberliegenden unteren Oberflächen der Ausnehmungen und einer unteren Oberfläche der Vorsprünge ergibt, wobei sich die Kapazitäts-bildende Fläche pro angrenzendem Vorsprung für eine Grundzelle durch

$$\widetilde{F}_5 = (w_2 + w_1/2) \cdot w_1/2$$

ergibt.

Folglich ergibt sich für alle vier angrenzenden Vorsprünge pro Grundzelle eine Gesamtfläche $F_5$ von:

$$F_5 = 4\widetilde{F}_5 = 4(w_2 + w_1/2) \cdot w_1/2 = w_1^2 + 2w_1w_2 = (w_1 + w_2) \cdot w_1 + (w_2 w_1)$$

Zusätzlich wird durch die gegenüberliegenden Oberflächen 26 und 16 eine Kapazität $C_6$ erzeugt, die durch die quadratische Fläche der Oberfläche 26 und den Abstand $d_6$ festgelegt wird.

Folglich gilt für die Gesamtkapazität $C_z$ einer Grundzelle 30 die folgende Formel:

$$C_z = C_1 + C_2 + C_3 + C_4 + C_5 + C_6.$$

Dabei setzen sich die Einzelkapazitäten $C_1$ - $C_6$ gemäß der bekannten Plattenkondensatorformel folgendermaßen zusammen:

$$C_1 = \varepsilon_o \cdot \varepsilon_r \frac{w_2 \cdot h}{d_1}$$

$$C_2 = \varepsilon_o \cdot \varepsilon_r \frac{w_2 \cdot h}{d_2}$$

$$C_3 = \varepsilon_o \cdot \varepsilon_r \frac{w_2 \cdot h}{d_3}$$

$$C_4 = \varepsilon_o \cdot \varepsilon_r \frac{w_2 \cdot h}{d_4}$$

$$C_5 = \varepsilon_o \cdot \varepsilon_r \frac{(w_1 + w_2) \cdot w_1 + (w_2 \cdot w_1)}{d_5}$$

$$C_6 = \varepsilon_o \cdot \varepsilon_r \frac{w_2 \cdot w_2}{d_6} \,.$$

Wie es aus den obigen Formeln zu entnehmen ist, läßt sich durch ein Verändern der Eintauchhöhe h, d.h. durch eine vertikale Bewegung der ersten Elektrodenstruktur 10 in Richtung zu der dritten Elektrodenstruktur 14 hin, die Gesamtkapazität derart steuern, daß mit abnehmender Eintauchhöhe h sowohl die Seitenkapazitäten $C_1$, $C_2$, $C_3$, $C_4$ als auch die Kapazitäten $C_5$ und $C_6$ abnehmen.

Die Abnahme der Seitenkapazitäten $C_1$ - $C_4$ beruht dabei auf der Tatsache, daß sich ein Überlapp von gegenüberliegenden Oberflächen der Vorsprünge und der Ausnehmungen und folglich die Kapazitäts-erzeugende Fläche verringert, wobei jedoch der Abstand zwischen den überlappenden Oberflächen, d.h. $d_1$, $d_2$, $d_3$ bzw. $d_4$, bei der vertikalen Bewegung der ersten Elektrodenstruktur 10 nicht verändert wird.

Im Gegensatz dazu beruht die Abnahme der Kapazitäten $C_5$ und $C_6$ auf der Tatsache, daß durch eine vertikale Bewegung der ersten Elektrodenstruktur 10 in Richtung der dritten Elektrodenstruktur 14 der Abstand $d_5$ und $d_6$ zwischen den gegenüberliegenden oberen und unteren Oberflächen der ersten Elektrodenstruktur 10 und der zweiten Elektrodenstruktur 12 zunimmt, wobei sich die Größe der Kapazitäts-erzeugenden Flächen nicht ändert.

Wie es unter erneuter Bezugnahme auf Fig. 1 bereits erklärt wurde, wird zum Schalten des Kapazitätsschalters eine Steuerspannung an die erste 10 und dritte 14 Elektrodenstruktur angelegt, wodurch die erste Elektrodenstruktur 10 von der nicht-ausgelenkten Ruhelage in eine ausgelenkte Lage bewegt wird, bei der die erste Elektrodenstruktur 10 mit der zweiten Oberfläche 24 an den Höckern 22 der dritten Elektrodenstruktur 14 anstößt.

In diesem ausgelenkten Zustand wird folglich die Eintauchhöhe und daher die seitliche Überlappfläche minimal, d.h. bei diesem Ausführungsbeispiel null, so daß die elektrische Kapazität zwischen der ersten Elektrodenstruktur 10 und der zweiten Elektrodenstruktur 12 einen Minimumwert erreicht.

Das erfindungsgemäße Vorsehen der Vorsprünge 18a - 18d zum Erhöhen der Kapazität weist nun den zusätzlichen Vorteil auf, daß das Flächenträgheitsmoment der ersten Elektrodenstruktur 10 sehr viel größer als das einer entsprechenden Platte mit gleicher Dicke der abgeschiedenen Schicht ist, wobei die Dikke im Bereich von wenigen $\mu$m liegt.

Folglich wirken sich eine Schichtspannung und ein Spannungsgradient nur in geringem Umfang aus.

Insbesondere wird durch die verminderte Verbiegung der beweglichen ersten Elektrodenstruktur 10 jedoch ermöglicht, daß die Abstände $d_1$, $d_2$, $d_3$, $d_4$ und $d_5$ zwischen gegenüberliegenden Oberflächen der Vorsprünge 18a - 18d und Ausnehmungen 20a - 20d in der Ruhelage sehr klein, d.h. kleiner als 150 nm, gemacht werden können.

Durch diese geringen Abstände wird die Grundkapazität in dem Ruhelagezustand erhöht und eine hohe Veränderung der Kapazität bei einem Schalten in den ausgelenkten Zustand erreicht.

Dies bedeutet, daß zum Einen durch die zusätzlichen überlappenden Seitenwände der Ausnehmungen 20a - 20d und der Vorsprünge 18a - 18d eine Grundkapazität, d.h. die Kapazität in der Ruhelage, und eine schaltbare Kapazität, d.h. die Differenz zwischen maximaler und minimaler Kapazität, jeweils bezogen auf eine Substratfläche gegenüber bekannten Plattenelektroden wesentlich erhöht ist. Diese Erhöhung wird jedoch noch gesteigert, da die Abstände $d_1$, $d_2$, $d_3$, $d_4$ und $d_5$ zwischen gegenüberliegenden Oberflächen der Vorsprünge 18a -18d und Ausnehmungen 20a -20d durch die durch das hohe Flächenträgheitsmoment bewirkte geringe Verbiegung der beweglichen ersten Elektrodenstruktur 10 sehr kleine Werte annehmen können, wie es obig erklärt wurde. Dadurch wird eine hohe Empfindlichkeit des mikromechanischen Schalters erreicht. Dies soll nachfolgend quantitativ anhand eines bevorzugten Ausführungsbeispiels verdeutlicht werden.

Bei einem bevorzugten Ausführungsbeispiel weisen die Abstände $d_1$ - $d_5$ jeweils 100 nm auf, während der Abstand $d_6$ 2,5 $\mu$m, die Eintauchtiefe h 2 $\mu$m und die Breiten $w_1$ und $w_2$ jeweils 1 $\mu$m betragen. Bei diesem Ausführungsbeispiel ergibt sich folglich gemäß der obigen Formel mit einer Dielektrizitätszahl $\varepsilon_r$ = 1 (Luft) in der Ruhelage, d.h. in einem eingeschalteten Zustand, eine Gesamtkapazität pro Grundzelle 30 von 9,77 x $10^{-16}$ Farad, während sich in dem maximal ausgelenkten Zustand, der einem ausgeschalteten Zustand entspricht, eine Gesamtkapazität pro Grundzelle 30 von 1,52 x $10^{-17}$ Farad ergibt. Die Kapazität zwischen der ersten Elektrodenstruktur 10 und der dritten Elektrodenstruktur 14 beträgt dabei in dem Ruhelagezustand 1,41 x $10^{-17}$ Farad und in dem Zustand einer maximalen Auslenkung 1,41 x $10^{-16}$ Farad, wenn die Höhe x der Höcker 250 nm beträgt.

Das Herstellen von sehr kleinen Ruhelageabständen $d_1$ - $d_5$ zwischen den Vorsprüngen 18a -18d und den Ausnehmungen 20a - 20d wird durch das Vorsehen von Opferschichten erreicht, wie es nachfolgend beschrieben wird.

Als Opferschicht eignet sich beispielsweise eine Oxidschicht aus TEOS-Material (TEOS = Tetra-Ethyl-Ortho-Silikat) oder einem thermisch erzeugten Oxid, wobei dieselbe bei dem Herstellungsprozeß abgeschieden wird und in einem nachfolgenden Schritt durch eine isotrope Ätzung entfernt wird, so daß sich ein Spalt mit dem gewünschten Abstand zum Definieren der Elektrodenabstände in der nicht-ausgelenkten Lage ergibt. Durch dieses Verfahren können sehr kleine Abstände der gegenüberliegenden Oberflächen erreicht werden, die unabhängig von Auflösungsbegrenzungen einer Phototechnik sind.

Das Verfahren der Verwendung von Opferschichten ist dabei nicht nur auf das Erzeugen der Spalte mit kleinem Abstand beschränkt, sondern kann erfindungsgemäß auch zum Erzeugen des breiten Spalts 28 zwischen der ersten 10 und zweiten 12 Elektrodenstruktur verwendet werden.

Ein Vorteil dieses Verfahrens ist, daß die Herstellung des erfindungsgemäßen mikromechanischen Kapazitätsschalters unter Verwendung von Opferschichten ohne weiteres vollständig in einen BiCMOS-Prozeß integriert werden kann. Dies wird dadurch ermöglicht, daß als Material für die Opferschichten zum Definieren der Abstände $d_1$ - $d_5$ ein Gateoxid-Material verwendet werden kann und ferner die erforderliche Dicke der Opferschicht einer Dicke der Gateoxidschicht entspricht. Ferner kann zum Erzeugen einer Opferschicht zum Definieren des Spalts 28, der einen größeren Abstand $d_6$ aufweist, eine dikkere TEOS-Schicht verwendet wird, wie sie typischerweise auch bei BiCMOS-Prozessen verwendet wird.

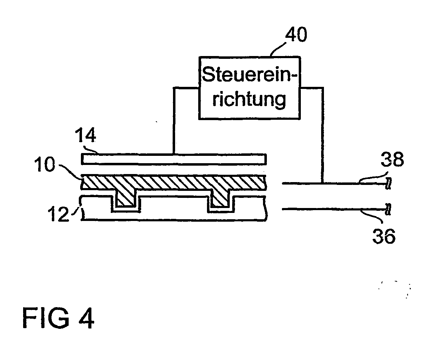

Unter Bezugnahme auf Fig. 4 wird nun ein Betrieb des mechanischen Kapazitätsschalters erklärt. Zum Betreiben des mechanischen Kapazitätsschalters ist die erste 10 und zweite 12 Elektrodenstruktur mit Leitungen 36 bzw. 38 elektrisch verbunden. Ferner ist die dritte Elektrodenstruktur 14 und die erste Elektrodenstruktur 10 mit einer Steuereinrichtung 40 elektrisch verbunden, die eine Steuerspannung an die erste 10 und dritte 14 Elektrodenstruktur anlegt.

Beispielsweise kann die steuerbare elektrische Kapazität des erfindungsgemäßen Kapazitätsschalters mit einem HF-Schaltkreis verbunden sein, wobei durch das Schalten der elektrischen Kapazität eine Resonanzfrequenz des Schaltkreises verstimmt wird, um ein Ein- oder Auskoppeln eines Hochfrequenzsignals zu steuern.

Da die bewegliche Elektrodenstruktur 10 erfindungsgemäß zwischen der zweiten und dritten Elektrodenstruktur angeordnet ist und somit die als aktuirende Gegenelektrode wirkende dritte Elektrodenstruktur 14 von der Kapazitätserzeugenden zweiten Elektrodenstruktur 12 getrennt ist, werden erfindungsgemäß nachteilige Effekte vermieden, die sich bei bekannten mikromechanischen Schaltern ergeben, bei denen die aktuirende Gegenelektrode und die kapazitätserzeugende Gegenelektrode im Signalpfad identisch sind.

Ferner kann der erfindungsgemäße Kapazitätschalter bei einem weiteren Ausführungsbeispiel derart betrieben werden, daß zusätzlich zu der schaltbaren Kapazität zwischen der ersten 10 und zweiten 12 Elektrodenstruktur die sich bei einem Schaltvorgang ebenfalls ändernde elektrische Kapazität zwischen der ersten 10 und dritten 14 Elektrodenstruktur als eine schaltbare Kapazität eines zweiten Schaltkreises ausgenützt wird. Dazu kann beispielsweise die dritte Elektrodenstruktur 14 mit einer weiteren Leitung an einen zweiten Schaltkreis gekoppelt sein.

Obwohl bei dem beschriebenen Ausführungsbeispiel vier Ausnehmung und vier Vorsprüngen gezeigt wurde, sind alternative Ausführungsbeispiele möglich, bei denen eine Mehrzahl von Ausnehmungen und eine entsprechende Mehrzahl von Vorsprüngen jeweils mehr oder weniger als vier Ausnehmungen umfasst.

Ferner ist erfindungsgemäß bei einem Ausführungsbeispiel lediglich eine Ausnehmung der zweiten Elektrodenstruktur 12 und ein zugeordneter Vorsprung der ersten Elektrodenstruktur 10 vorgesehen.


Bezugszeichenliste

10        erste Elektrodenstruktur

| 12 | zweite Elektrodenstruktur |
| 12 a | seitliche Oberfläche |
| 12 b | seitliche Oberfläche |
| 12 c | seitliche Oberfläche |
| 12 d | seitliche Oberfläche |
| 12 e | untere Oberfläche |
| 14 | dritte Elektrodenstruktur |
| 16 | erste Oberfläche |
| 18 a | Vorsprung |
| 18 b | Vorsprung |
| 18 c | Vorsprung |
| 18 d | Vorsprung |
| 20 | Ausnehmung |
| 22 | Höcker |
| 24 | zweite Oberfläche |
| 26 | obere Oberfläche |
| 28 | Spalt |
| 30 | Grundzelle |
| 32 | Quader |
| 34 a | seitliche Oberfläche |
| 34 b | seitliche Oberfläche |
| 34 c | seitliche Oberfläche |
| 34 d | seitliche Oberfläche |
| 36 | Leitung |
| 38 | Leitung |
| 40 | Steuereinrichtung |

**Patentansprüche**

1. Vorrichtung zum mechanischen Steuern einer elektrischen Kapazität, wobei die Vorrichtung folgende Merkmale aufweist:

   eine erste Elektrodenstruktur (10) mit einer ersten (16) und zweiten (24) Oberfläche, wobei die erste Oberfläche (16) zumindest einen Vorsprung (18a, 18b, 18c, 18d) aufweist;
   eine zweite Elektrodenstruktur (12), die von der ersten Elektrodenstruktur (10) beabstandet ist und zumindest eine Ausnehmung (20a, 20b, 20c, 20d) aufweist, die so angeordnet ist, daß der zumindest eine Vorsprung (18a - 18d) der ersten Elektrodenstruktur (10) in dieselbe ragt, wodurch eine elektrische Kapazität zwischen gegenüberliegenden Oberflächenbereichen der ersten (10) und zweiten (12) Elektrodenstruktur festgelegt ist; und
   eine dritte Elektrodenstruktur (14) zum Steuern der elektrischen Kapazität zwischen der ersten (10) und zweiten (12) Elektrodenstruktur, wobei die dritte Elektrodenstruktur (14) zu der ersten Elektrodenstruktur (10) beabstandet ist und der zweiten Oberfläche (24) der ersten Elektrodenstruktur (10) gegenüberliegt;
   wobei die erste Elektrodenstruktur (10) bezüglich der zweiten (12) und dritten (14) Elektrodenstruktur frei beweglich ausgebildet ist, so daß durch ein Anlegen einer elektrischen Spannung zwischen der ersten (10) und dritten (14) Elektrodenstruktur die elektrische Kapazität zwischen der ersten (10) und zweiten (12) Elektrodenstruktur durch ein Verändern des Abstands zwischen der ersten (10) und zweiten (12) Elektrodenstruktur steuerbar ist.

2. Vorrichtung gemäß Anspruch 1, bei der die erste (10), zweite (12) und dritte (14) Elektrodenstruktur auf einem Substrat (8) gebildet ist, wobei die zweite (12) und dritte (14) Elektrodenstruktur bezüglich des Substrats (8) fest angeordnet sind.

3. Vorrichtung gemäß Anspruch 1 oder 2, bei der die dritte Elektrodenstruktur (14) eine leitfähige Abdeckung zum Liefern eines mechanischen Schutzes ist.

4. Vorrichtung gemäß Anspruch 2 oder 3, bei der die zweite Elektrodenstruktur (12) einen dotierten Bereich eines Substrats, Polysilizium oder ein Metall umfaßt.

**5.** Vorrichtung gemäß einem der Ansprüche 1 bis 4, bei der die erste Elektrodenstruktur (10) aus Polysilizium gebildet ist.

**6.** Vorrichtung gemäß einem der Ansprüche 1 bis 5, bei der ein minimaler Abstand von gegenüberliegenden Oberflächenbereichen der ersten (10) und zweiten (12) Elektrodenstruktur kleiner oder gleich 150 nm ist.

**7.** Vorrichtung gemäß einem der Ansprüche 1 bis 6, bei der die erste (10) und zweite (12) Elektrodenstruktur mit einer Hochfrequenzschaltung elektrisch verbunden ist, wobei die zwischen gegenüberliegenden Oberflächenbereichen der ersten (10) und zweiten (12) Elektrodenstruktur festgelegte elektrische Kapazität verwendet wird, um ein Hochfrequenzsignal zu schalten.

**8.** Vorrichtung gemäß einem der Ansprüche 2 bis 7, bei der die erste Elektrodenstruktur (10) durch eine Feder mit dem Substrat (8) elastisch verbunden ist.

**9.** Verfahren zum Herstellen einer Vorrichtung zum mechanischen Steuern einer elektrischen Kapazität gemäß Anspruch 1 mit folgenden Schritten:

Bereitstellen eines Substrats (8);
Erzeugen einer ersten Elektrodenstruktur (10) mit zumindest einem Vorsprung (18a - 18d) auf einer ersten Seite (16) derselben, derart, daß die erste Elektrodenstruktur (10) beweglich bezüglich des Substrats (8) ausgebildet ist;
Erzeugen einer zweiten Elektrodenstruktur (12) mit zumindest einer Ausnehmung (20a - 20d) derart, daß die zweite Elektrodenstruktur (12) von der ersten Elektrodenstruktur (10) beabstandet und bezüglich des Substrats (8) fest angeordnet ist und die erste Elektrodenstruktur (10) und der zumindest eine Vorsprung (18a - 18d) der ersten Elektrodenstruktur (10) in die zumindest eine Ausnehmung (20a - 20d) der zweiten Elektrodenstruktur (18a - 18d) ragt, so daß eine elektrische Kapazität zwischen gegenüberliegenden Oberflächenbereichen der ersten (10) und zweiten (12) Elektrodenstruktur festgelegt ist; und
Erzeugen einer dritten Elektrodenstruktur (14) zum Steuern der elektrischen Kapazität zwischen der ersten (10) und zweiten (12) Elektrodenstruktur, derart, daß die dritte (14) Elektrodenstruktur zu der ersten Elektrodenstruktur (10) beabstandet und bezüglich des Substrats (8) fest angeordnet ist und einer zweiten Oberfläche (24) der ersten Elektrodenstruktur (10) gegenüberliegt.

**Claims**

**1.** Apparatus for mechanically controlling an electrical capacitance, the apparatus comprising:

a first electrode structure (10) with a first (16) and a second (24) surface, wherein the first surface (16) comprises at least one protrusion (18a, 18b, 18c, 18d);
a second electrode structure (12) spaced apart from the first electrode structure (10) and comprising at least one recess (20a, 20b, 20c, 20d) arranged so that the at least one protrusion (18a - 18d) of the first electrode structure (10) projects into the same, whereby an electrical capacitance between the opposite surface regions of the first (10) and second (12) electrode structures is established; and
a third electrode structure (14) for controlling the electrical capacitance between the first (10) and second (12) electrode structures, wherein the third electrode structure (14) is spaced apart from the first electrode structure (10) and lies opposite to the second surface (24) of the first electrode structure (10) ;
wherein the first electrode structure (10) is formed in a freely movable manner with reference to the second (12) and third (14) electrode structures, so that, by applying an electrical voltage between the first (10) and third (14) electrode structures, the electrical capacitance between the first (10) and second (12) electrode structures is controllable by changing the distance between the first (10) and second (12) electrode structures.

**2.** Apparatus according to claim 1, wherein the first (10), second (12), and third (14) electrode structure is formed on a substrate (8), wherein the second (12) and third (14) electrode structures are fixedly arranged with reference to the substrate (8).

**3.** Apparatus according to claim 1 or 2, wherein the third electrode structure (14) is a conductive cover for providing mechanical protection.

**4.** Apparatus according to claim 2 or 3, wherein the second electrode structure (12) includes a doped region of a substrate, polysilicon, or a metal.

5. Apparatus according to one of claims 1 to 4, wherein the first electrode structure (10) is formed of polysilicon.

6. Apparatus according to one of claims 1 to 5, wherein a minimum distance of opposite surface regions of the first (10) and second (12) electrode structures is smaller than or equal to 150 nm.

7. Apparatus according to one of claims 1 to 6, wherein the first (10) and second (12) electrode structure is electrically connected to a high-frequency circuit, wherein the electrical capacitance established between the opposite surface regions of the first (10) and second (12) electrode structures is used to switch a high-frequency signal.

8. Apparatus according to one of claims 2 to 7, wherein the first electrode structure (10) is elastically connected to the substrate (8) by a spring.

9. Method of producing an apparatus for mechanically controlling an electrical capacitance according to claim 1, comprising:

   providing a substrate (8);
   producing a first electrode structure (10) with at least one protrusion (18a - 18d) on a first side (16) thereof, such that the first electrode structure (10) is formed in a movable manner with reference to the substrate (8);
   producing a second electrode structure (12) with at least one recess (20a - 20d), such that the second electrode structure (12) is spaced apart from the first electrode structure (10) and fixedly arranged with reference to the substrate (8), and the first electrode structure (10) and the at least one protrusion (18a - 18d) of the first electrode structure (10) project into the at least one recess (20a - 20d) of the second electrode structure (18a - 18d), so that an electrical capacitance between opposite surface regions of the first (10) and second (12) electrode structures is established; and
   producing a third electrode structure (14) for controlling the electrical capacitance between the first (10) and second (12) electrode structures, such that the third (14) electrode structure is spaced apart from the first electrode structure (10) and fixedly arranged with reference to the substrate (8) and lies opposite to a second surface (24) of the first electrode structure (10).


**Revendications**

1. Dispositif pour réguler mécaniquement une capacité électrique, le dispositif présentant les caractéristiques suivantes :

   une première structure d'électrode (10) avec une première (16) et une deuxième (24) surface, la première surface (16) présentant au moins un saillie (18a, 18b, 18c, 18d) ;
   un deuxième structure d'électrode (12), qui est distante de la première structure d'électrode (10) et présente au moins un évidement (20a, 20b, 20c, 20d) qui est disposé de sorte que l'au moins une saillie (18a à 18d) de la première structure d'électrode (10) pénètre dans ce dernier, d'où est établie une capacité électrique entre des zones de surface opposées de la première (10) et de la deuxième (12) structure d'électrode ; et
   une troisième structure d'électrode (14) destinée à réguler la capacité électrique entre la première (10) et la deuxième (12) structure d'électrode, la troisième structure d'électrode (14) étant distante de la première structure d'électrode (10) et la deuxième surface (24) de la première structure d'électrode (10) ;
   la première structure d'électrode (10) étant réalisée de manière déplaçable librement par rapport à la deuxième (12) et la troisième (14) structure d'électrode, de sorte que par une application d'une tension électrique entre la première (10) et la troisième (14) structure d'électrode soit réglable la capacité électrique entre la première (10) et la deuxième (12) structure d'électrode en modifiant la distance entre la première (10) et la deuxième (12) structure d'électrode.

2. Dispositif selon la revendication 1, dans lequel la première (10), la deuxième (12) et la troisième (14) structure d'électrode sont formées sur un substrat (8), la deuxième (12) et la troisième (14) structure d'électrode étant disposées fixes par rapport au substrat (8).

3. Dispositif selon la revendication 1 ou 2, dans lequel la troisième structure d'électrode (14) est un recouvrement conducteur destiné à offrir une protection mécanique.

**4.** Dispositif selon la revendication 2 ou 3, dans lequel la deuxième structure d'électrode (12) comporte une zone dopée d'un substrat, du polysilicium ou un métal.

**5.** Dispositif selon l'une des revendications 1 à 4, dans lequel la première structure d'électrode (10) est réalisée en polysilicium.

**6.** Dispositif selon l'une des revendications 1 à 5, dans lequel une distance minimale entre les zones de surface opposées de la première (10) et de la deuxième (12) structure d'électrode est inférieure ou égale à 150 nm.

**7.** Dispositif selon l'une des revendications 1 à 6, dans lequel la première (10) et de la deuxième (12) structure d'électrode sont reliées électriquement à un circuit haute fréquence, la capacité électrique établie entre les zones de surface opposées de la première (10) et de la deuxième (12) structure d'électrode étant utilisée pour commuter un signal haute fréquence.

**8.** Dispositif selon l'une des revendications 2 à 7, dans lequel la première structure d'électrode (10) est reliée par un ressort de manière élastique au substrat (8).

**9.** Procédé pour produire un dispositif de régulation mécanique d'une capacité électrique selon la revendication 1, aux étapes suivantes :

préparer un substrat (8) ;
générer une première structure d'électrode {10) avec au moins une saillie (18a à 18d) d'un premier côté (16) de cette dernière, de sorte que la première structure d'électrode (10) soit réalisée de manière déplaçable par rapport au substrat (8) ;
générer une deuxième structure d'électrode (12) avec au moins un évidement (20a à 20d) de sorte que la deuxième structure d'électrode soit disposée (12) distante de la première structure d'électrode (10) et fixe par rapport au substrat (8) et que la première structure d'électrode (10) et l'au moins une saillie (18a à 18d) de la première structure d'électrode (10) pénètre dans l'au moins un évidement (20a à 20d) de la deuxième structure d'électrode (18a à 18d), de sorte que soit établie une capacité électrique entre les zones de surface opposées de la première (10) et de la deuxième (12) structure d'électrode ; et
générer une troisième structure d'électrode (14) destinée à réguler la capacité électrique entre la première (10) et la deuxième (12) structure d'électrode, de sorte que la troisième (14) structure d'électrode soit disposée distante de la première structure d'électrode (10) et fixe par rapport au substrat (8) et soit opposée à une deuxième surface (24) de la première structure d'électrode (10).

FIG 1

FIG 2

FIG 3

**FIG 4**